# EUROPÄISCHE PATENTSCHRIFT

(11) **EP 0 674 662 B1**
(45) Veröffentlichungstag und Bekanntmachung des Hinweises auf die Patenterteilung: **25.11.1998**
(21) Anmeldenummer: 94927439.3
(22) Anmeldetag: 28.09.1994
(51) Int. Cl.: C08B 1/00, C08J 3/09

(54) **VERFAHREN ZUR HERSTELLUNG VON LÖSUNGEN VON CELLULOSE**
METHOD OF PREPARING CELLULOSE SOLUTIONS
PROCEDE POUR LA PREPARATION DE SOLUTIONS DE CELLULOSE

(30) Priorität: 19.10.1993 AT 2104/93
(43) Veröffentlichungstag der Anmeldung: 04.10.1995
(73) Patentinhaber: LENZING AKTIENGESELLSCHAFT, 4860 Lenzing (AT)
(72) Erfinder: ZIKELI, Stefan, A-4844 Regau (AT); HINTERHOLZER, Peter, A-4861 Schörfling (AT)
(74) Vertreter: Schwarz, Albin, Dr. Kopecky & Schwarz Patentanwälte
(86) Internationale Anmeldenummer: AT9400138
(87) Internationale Veröffentlichungsnummer: WO9511261

(56) Entgegenhaltungen:
- EP-A- 0 356 419
- EP-A- 0 452 610
- CA-A- 914 674
- DE-A- 2 830 685
- DE-A- 3 027 033
- FR-A- 891 434
- US-A- 2 035 148
- DATABASE WPI Week 9215, Derwent Publications Ltd., London, GB; AN 121407 & SU,A,1 645 308 (GOLOVA L K) 30. April 1991

## Beschreibung

Die vorliegende Erfindung betrifft ein Verfahren zur Herstellung einer formbaren Lösung von Cellulose in einem wasserhältigen tertiären Aminoxid.

Tertiäre Aminoxide sind als alternative Lösungsmittel für Cellulose bekannt. Aus der US-PS 2,179,181 ist beispielsweise bekannt, daß tertiäre Aminoxide Cellulose ohne Derivatisierung zu lösen vermögen und daß aus diesen Lösungen durch Fällung cellulosische Formkörper wie Fasern gewonnen werden können. In den US-PSen 3,447,939, 3,447,956 und 3,508,941 werden weitere Verfahren zur Herstellung cellulosischer Lösungen beschrieben, wobei als Lösungsmittel bevorzugt cyclische Aminoxide eingesetzt werden. Bei allen diesen Verfahren wird Cellulose bei erhöhter Temperatur physikalisch gelöst.

Wenn die Lösung in einem Doppelschneckenextruder oder in einem Rührgefäß bereitet wird, muß der Zellstoff einer Voraktivierung unterzogen werden, um den Löseprozeß ausreichend schnell zu vollziehen (siehe "Das Papier", Heft 12, Seiten 784-788). Als Voraktivierung werden die Bildung und Regenerierung von Alkalicellulose oder eine hydrothermische Zellstoffbehandlung vorgeschlagen.

Auch gemäß der DD-A - 226 573 wird vor der Lösungsbereitung, die ebenfalls in einem Extruder durchgeführt wird, die Cellulose voraktiviert. Die genannte DD-A geht von einer NMMO-hältigen Cellulose-Suspension mit einer niedrigen Stoffdichte von maximal 2,5 Massen% Cellulose aus. Diese Cellulose-Suspension wird in einem Rührgefäß homogenisiert. Anschließend wird durch Zentrifugieren oder Abpressen die Stoffdichte auf 12,5 Massen% erhöht, auf einen Wassergehalt von 10 - 15 Massen% (bezogen auf NMMO) getrocknet und in einem Extruder mit Entgasungszone bei Temperaturen zwischen 75 und 120°C in eine klare Lösung übergeführt.

Das Verfahren gemäß der genannten DD-A - 226 573 ist mit dem Nachteil behaftet, daß nach der Homogenisierung die Stoffdichte von 2,5 Massen% auf 12,5 Massen% erhöht werden muß, bevor mit der eigentlichen Lösungsherstellung begonnen werden kann. Dies erfordert einen eigenen, zusätzlichen Arbeitsschritt. Außerdem wird beim Abpressen oder Zentrifugieren nicht nur Wasser, sondern unerwünschterweise auch NMMO entfernt.

Das in der EP-A - 0 356 419 der Anmelderin beschriebene Verfahren geht u.a. von Zellstoff aus, der in trockenem Zustand gemahlen wurde. Der Einsatz eines trocken gemahlenen Zellstoffes gestattet, den Zellstoff in einer so großen Menge in die wässerige NMMO-Lösung einzurühren, daß sich der Arbeitsschritt zur Erhöhung der Stoffdichte erübrigt. Allerdings kann das Ausgangsmaterial, also der trocken gemahlene Zellstoff, Verhornungen aufweisen, die von einer lokalen Überhitzung in der Mahlvorrichtung stammen und sich auf die Löslichkeit im wässerigen NMMO nachteilig auswirken. Außerdem schädigt eine trockene Feinmahlung die Cellulosestruktur. In dieser Hinsicht wäre eine zu größeren Teilchen führende trockene Mahlung zwar besser, größere Teilchen müssen zur Lösung aber besser aufgeschlossen werden, da andernfalls die Cellulose nur oberflächlich angequollen und schlecht gelöst wird, was Gelkörper zur Folge hat, die der Cellulose-Lösung eine schlechte Filtrierbarkeit verleihen.

Die Erfindung stellt sich die Aufgabe, die Herstellung von Lösungen von Cellulose in tertiären Aminoxiden zu vereinfachen und zu verbessern.

Das erfindungsgemäße Verfahren zur Herstellung einer formbaren Lösung von Cellulose in einem wasserhältigen tertiären Aminoxid, ist gekennzeichnet durch die Kombination der Maßnahmen, daß
(a) vorzerkleinerte cellulosische Materialien in eine wässerige Lösung eines tertiären Aminoxids eingebracht werden, um eine erste Suspension mit einer Trockenstoffdichte zwischen 10 Massen% und 35 Massen% Cellulose herzustellen,
(b) die erste Suspension einer Mahlung unterzogen wird, wobei eine zweite Suspension erhalten wird, und
(c) die zweite Suspension durch Wärmezufuhr unter vermindertem Druck in die formbare Lösung von Cellulose übergeführt wird.

Es hat sich gezeigt, daß eine nasse Mahlung bei einer Trockenstoffdichte im Bereich von 10 bis 35 Massen%, der als Hochkonsistenzbereich bezeichnet wird, in Anwesenheit eines tertiären Aminoxids das cellulosische Material derart gut aufschließt bzw. aktiviert, daß die Lösungsherstellung erleichtert wird. Als Mahlgeräte eignen sich herkömmliche Hochkonsistenzmischer, Disperger und Refiner.

Die nasse Mahlung der Cellulose im Hochkonsistenzbereich ist als solche aus der CA-PS 914674 bekannt. Sie dient dazu, Cellulose, die für eine nachfolgende Umsetzung zu Celluloseacetat bestimmt ist, für die chemische Reaktion besser aufzuschließen.

Bei der nassen Mahlung werden die Fasern geschnitten, fibrilliert und gequollen. Unter Fibrillieren versteht man das Aufspalten der Fasern parallel zur Faserachse. Ein großer Teil der Fibrillen bleibt nach dem Mahlen fransenartig an den Fasern hängen. Zur Mahlung dienen Maschinen, wie z.B. Holländer, Kegelstoffmühlen, Refiner Scheibenmühlen, Stofflöser und Pulper. Bei der Mahlung wird der Stoffbrei zwischen einem bewegten und einem feststehenden Maschinenteil bearbeitet.

Aus der DE-A-30 27 033 ist ein Verfahren zum Lösen von Cellulose bekannt, gemäß dem die Cellulose in Dimethylacetamid, 1-Methyl-2-pyrrolidon oder in Mischungen derselben und unter Zusatz von Lithiumchlorid gelöst wird, wobei die Cellulose vor dem Lösen aktiviert wird. Gemäß der DE-A-30 27 033 besteht eine Möglichkeit der Aktivierung darin, eine 2- bis 4%-ige Aufschlämmung oder Suspension der Cellulose unter hohem Druck durch eine Emulgiervorrichtung durchfließen zu lassen, wobei die Zellulose in Einzelfasern zerlegt wird.

Beim erfindungsgemäßen Mahlen im Hochkonsistenzbereich wird die zum Mahlen aufgewendete Energie auf die Cellulose besser übertragen als beim herkömmlichen Mahlen. Dadurch kommt es nicht nur zu einem Aufspalten der Cellulose in Einzelfasern sondern auch zu einem Fibrillieren und Zerschneiden der einzelnen Fasern.

Das erfindungsgemäße Verfahren zeichnet sich weiters dadurch aus, daß die gewünschte Wirkung selbst dann auftritt, wenn die zur Herstellung der ersten Suspension verwendete wässerige Lösung das tertiäre Aminoxid nur zwischen 60 und 72 Massen% enthält und somit einen relativ hohen Wassergehalt aufweist. Dies ermöglicht es auf einfache Weise, z.B. gebrauchte Spinnbäder bzw. Koagulationsbäder nach Regenerierung als Lösungsmittel wiederzuverwenden. Es hat sich gezeigt, daß die gewünschte Wirkung auch dann auftritt, wenn Zusatzstoffe in der ersten und/oder in der zweiten Suspension anwesend sind, wie z.B. TiO₂, Kaolin, Farbstoffe, Graphit, BaSO₄, Carboxymethylcellulose und Flammschutzmittel.

Zur Auflösung der Cellulose im Schritt (c) muß dann lediglich der Wassergehalt auf unter 17 Massen% eingestellt werden. Dies kann so durchgeführt werden, daß zunächst in einem ersten Schritt das überschüssige Wasser abgezogen und dann in einem Extruder die erhaltene Masse zur Lösung aufgeschmolzen wird. Diese Arbeitsgänge sind z.B. aus der DE-A - 28 30 685 bekannt. Zweckmäßigerweise werden diese beiden Arbeitsgänge aber zu einem einzigen vereinigt, indem die im Schritt (b) erhaltene zweite Suspension direkt gemäß dem in der EP-A - 0 356 419 beschriebenen Verfahren in die Lösung übergeführt wird.

Es hat sich gezeigt, daß das im erfindungsgemäßen Verfahren eingesetzte, vorzerkleinerte cellulosische Material noch mit einer Teilchengröße von 70 mm problemlos zur zweiten Suspension verarbeitet werden kann. Besonders vorteilhaft werden Cellulosechips mit einer Größe bis zu 20 mm als vorzerkleinertes Material eingesetzt. Diese Chips können beispielsweise in einer Hammermühle oder in einer Schneidmühle gewonnen werden.

Ein weiterer Vorteil des erfindungsgemäßen Verfahrens liegt darin, daß nicht nur hochwertiger Zellstoff als cellulosisches Material eingesetzt werden kann, sondern beispielsweise zumindest teilweise auch Altpapier, Altkarton oder Papierpreßteile. Es ist sogar möglich, als das cellulosische Material teilweise Holzschnitzel und/oder Sägespäne vorzusehen und zu verarbeiten. Es ist bekannt, daß Holzfasern, die normalerweise dicke Zellwände aufweisen, Fasern mit hohem Ligningehalt oder mit hohem Harz gehalt die Reaktivität der Cellulose herabsetzen. Die erfindungsgemäß vorgesehene Hochkonsistenzmahlung in Gegenwart eines tertiären Aminoxids aktiviert diese cellulosischen Materialien aber derart gut, daß im Schritt (c) eine homogene Lösung mit guten Filtrationseigenschaften gebildet wird.

Im erfindungsgemäßen Verfahren hat sich als tertiäres Aminoxid N-Methyl-morpholin-N-oxid besonders gut bewährt.

Die Erfindung betrifft weiters ein Verfahren zur Herstellung cellulosischer Formkörper, bei welchem Verfahren die erfindungsgemäß hergestellte Cellulose-Lösung geformt und in ein Fällbad eingebracht wird. Als Formkörper sind beispielsweise Folien, Schlauchfolien, gesponnene Fasern und Schwämme anzusehen.

Mit den nachfolgenden Beispielen wird die Erfindung in einer bevorzugten Ausführungsform näher beschrieben.

### Allgemeine Verfahrensweise

Zellstoff wurde vorzerkleinert und in einem Mischer mit einer solchen Menge 72%igem NMMO (28 Massen% Wasser) imprägniert, daß 11-16%ige Suspensionen erhalten wurden. Anschließend wurden die Suspensionen auf eine Temperatur zwischen 50-65°C erhitzt.

Der auf diese Weise mit NMMO vorimprägnierte Zellstoff wurde aus dem Mischer mittels einer Exzenterpumpe kontinuierlich ausgetragen und mit einer Förderschnecke einem Refiner zugeführt. Das über die Mahl- bzw. Dispergierplatten des Refiners geführte Produkt wurde über einen Austragsstutzen abgenommen und mittels einer Exzenterschneckenpumpe in ein Puffergefäß (z.B. Mischer) überführt, von dem es zur Lösungsbereitung entnommen wurde. Die Lösung wurde gemäß dem in der EP-A - 0 356 419 beschriebenen Verfahren bereitet.

### Beispiele 1-4

Zur Mahlung wurde ein Krima-Disperger KD 450 (Scheibendurchmesser 450 mm; Rotordrehzahl 1500 min⁻¹) verwendet.
Ausgangsmaterial war ein Vorhydrolyse-Sulfatzellstoff des Typs Buckeye V5 (Hersteller: Procter & Gamble), der mittels eines Schneidgranulators auf eine Größe von 4 mm vorzerkleinert und mit 70%igem NMMO abgemischt war. Die Ergebnisse sind in der Tabelle 1 dargestellt:

**Tabelle 1**

| Beisp. Nr. | Konsistenz (Massen%) | Durchsatz (kg/h) | Mahlspalt (mm) |
|---|---|---|---|
| 1 | 11,40 | 272 | 0,05 |
| 2 | 11,38 | 272 | 0,10 |
| 3 | 11,83 | 272 | 0,20 |
| 4 | 11,68 | 272 | 0,30 |
| Vergleich | 11,49 | --- | ---- |

Die in den Beispielen 1-4 erhaltenen Suspensionen konnten in kürzerer Zeit in eine Lösung übergeführt werden als die ungemahlene Vergleichssuspension (Vergleich), in der noch dazu vereinzelt Gelkörper zu sehen waren.

Wie bereits erwähnt, wurde das Vergleichsbeispiel mit ungemahlenem und somit lediglich vorzerkleinertem und mit Aminoxid imprägnierten Zellstoff durchgeführt. Die Zellstoffstückchen umgeben sich entsprechend der Lösungsherstellung nach dem NMMO-Verfahren (unabhängig davon, ob die Lösungsbereitung im Rührkessel, Extruder oder im Filmtruder durchgeführt wurde) während des Abdampfens von Wasser mit hochviskoser, frisch entstandener Celluloselösung und stellen dadurch für den weiteren Stoffaustausch ein Hindernis dar. Es wird angenommen, daß dies die Ursache dafür ist, daß Gelkörper entstehen und sich die hochviskose Lösung nur teilweise ausbildet. Diese Gelkörper führen zu Filtrationsproblemen.

### Beispiele 5 und 6

Zur Mahlung wurde ein Andritz Sprout-Bauer Refiner (Scheibendurchmesser 300 mm; Rotordrehzahl 3000 min⁻¹) verwendet. Ausgangsmaterial war ein Vorhydrolyse-Sulfatzellstoff des Typs Buckeye V5 (Hersteller: Procter & Gamble) mit einer Teilchengröße maximal 70 mm vorzerkleinert und mit 70%igem NMMO abgemischt war. Die Ergebnisse sind in der Tabelle 2 dargestellt:

**Tabelle 2**

| Beisp. Nr. | Konsistenz (Massen%) | Durchsatz (kg/h) | Mahlspalt (mm) |
|---|---|---|---|
| 5 | 14,5 | 150 | 0,20 |
| 6 | 14,5 | 150 | 0,30 |
| Vergleich | 15,9 | --- | ---- |

Da die Cellulosestückchen eine Größe von maximal 70 x 70 mm hatten, war zur Lösungsbereitung eine längere Zeit als bei den Beispielen 1-4 erforderlich. Aber auch hier war das Phänomen zu beobachten, daß die in den Beispielen 5 und 6 erhaltenen Suspensionen in kürzerer Zeit in eine Lösung übergeführt werden konnten als die ungemahlene Vergleichssuspension, in der noch dazu Gelkörper zu sehen waren.

## Patentansprüche

1. Verfahren zur Herstellung einer formbaren Lösung von Cellulose in einem wasserhältigen tertiären Aminoxid, gekennzeichnet durch die Kombination der Maßnahmen, daß
(a) vorzerkleinerte cellulosische Materialien in eine wässerige Lösung eines tertiären Aminoxids eingebracht werden, um eine erste Suspension mit einer Trockenstoffdichte zwischen 10 Massen% und 35 Massen% Cellulose herzustellen,
(b) diese erste Suspension einer Mahlung unterzogen wird, wobei eine zweite Suspension erhalten wird, und
(c) diese zweite Suspension durch Wärmezufuhr unter vermindertem Druck in die formbare Lösung von Cellulose übergeführt wird.

2. Verfahren nach Anspruch 1, dadurch gekennzeichnet, daß die zur Herstellung der ersten Suspension eingesetzte wässerige Lösung das tertiäre Aminoxid zwischen 60 und 72 Massen% enthält.

3. Verfahren nach Anspruch 1 oder 2, dadurch gekennzeichnet, daß das vorzerkleinerte cellulosische Material eine Teilchengröße von maximal 70 mm aufweist.

4. Verfahren nach einem der Ansprüche 1 bis 3, dadurch gekennzeichnet, daß als cellulosisches Material zumindest teilweise Altpapier eingesetzt wird, welches zerkleinert ist.

5. Verfahren nach einem der Ansprüche 1 bis 3, dadurch gekennzeichnet, daß als cellulosisches Material zumindest teilweise Holzschnitzel und/oder Sägespäne eingesetzt werden.

6. Verfahren nach Anspruch 4, dadurch gekennzeichnet, daß als cellulosisches Material teilweise Zellstoff eingesetzt wird.

## Claims

1. Process for producing a mouldable solution of cellulose in a water-containing tertiary amine oxide, characterized by the combination of measures that
(a) precomminuted cellulosic materials are introduced into an aqueous solution of a tertiary amine oxide in order to produce a first suspension having a drymatter density of between 10% by mass and 35% by mass of cellulose,
(b) said first suspension is subjected to a grinding, a second suspension being obtained, and
(c) said second suspension is converted into the mouldable solution of cellulose by supplying heat under reduced pressure.

2. Process according to Claim 1, characterized in that the aqueous solution used to produce the first suspension contains between 60 and 72% by mass of the tertiary amine oxide.

3. Process according to Claim 1 or 2, characterized in that the precomminuted cellulosic material has a particle size of not more than 70 mm.

4. Process according to one of Claims 1 to 3, characterized in that, at least in part, waste paper which has been comminuted is used as cellulosic material.

5. Process according to one of Claims 1 to 3, characterized in that, at least in part, wood chips and/or sawdust are used as cellulosic material.

6. Process according to Claim 4, characterized in that, in part, pulp is used as cellulosic material.

## Revendications

1. Procédé de fabrication d'une solution apte de cellulose au moulage dans un amino-oxyde tertiaire à teneur aqueuse, caractérisé par la combinaison des mesures que
(a) les matières cellulosiques préalablement désintégrées sont introduites dans une solution aqueuse d'un amino-oxyde tertiaire, afin de réaliser une première suspension possédant une densité sèche comprise entre 10% en masse et 35% en masse de cellulose,
(b) cette première suspension est soumise à un premier broyage, une deuxième suspension étant obtenue et,
(c) cette deuxième suspension est amenée sous pression réduite dans la solution de cellulose apte au moulage.

2. Procédé suivant la revendication 1, caractérisé en ce que la solution aqueuse utilisée pour la fabrication de la première suspension contient l'amino-oxyde tertiaire à concurrence d'un pourcentage en masse compris entre 60 et 72%.

3. Procédé suivant la revendication 1 ou 2, caractérisé en ce que la matière cellulosique préalablement désintégrée présente une dimension de particules de maximum 70 mm.

4. Procédé suivant l'une des revendications 1 à 3, caractérisé en ce que du vieux papier est utilisé au moins partiellement comme matière cellulosique, lequel est désintégré.

5. Procédé suivant l'une des revendications 1 à 3, caractérisé en ce que comme matière cellulosique, on utilise au moins en partie des copeaux de bois et/ou de la sciure de bois.

6. Procédé suivant la revendication 4, caractérisé en ce que comme matière cellulosique, on utilise au moins en partie de la pâte de cellulose.
